# EUROPÄISCHE PATENTANMELDUNG

(11) **EP 2 090 886 A2**
(43) Veröffentlichungstag der Anmeldung: **19.08.2009**
(21) Anmeldenummer: 09150992.7
(22) Anmeldetag: 21.01.2009
(51) Int. Cl.: G01N 29/30, G01N 29/44

(54) **Verfahren zur Optimierung der Spannungsverteilung bei Anwendungen akustischer Thermographie**

(30) Priorität: 12.02.2008 DE 102008008609
(71) Anmelder: Siemens Aktiengesellschaft, 80333 München (DE)
(72) Erfinder: Homma, Christian, 85591, Vaterstetten (DE); Broddegaard, Mattias, 61433, Söderköping (SE); Rothenfusser, Max, 81377, München (DE)

(57) **Zusammenfassung**

Verfahren zur Optimierung der Spannungsverteilung an einem auf Fehlstellen zu prüfenden Objekt (1) mittels Ultraschallanregung und Auswertung anhand resultierender oberflächlicher Temperaturverteilung, mit folgenden Schritten:
- vor einer Prüfung eines Objektes wird eine Simulation an einem CAD-Modell (Computer Aided Design) des Objekts unter Prüfbedingungen vorgenommen,
- es werden Schwingungsspektren und modale Schwingungsformen (3) berechnet,
- aus den Schwingungsmoden (3) werden jeweils lokale mechanische Spannungen (4) ermittelt, wobei
- für die reale Prüfung anzuregende Moden derart aus der Gesamtheit der auftretenden Moden ausgewählt werden, dass
- die mechanische Spannung (4) in einem ausgewählten Bereich (A) über einer vorgegebenen Mindestspannung liegt, um einen sicheren Defektnachweis zu ermöglichen,
- die mechanische Spannung (4) in allen anderen Bereichen (B) des Prüfteils (1), insbesondere an leicht zu schädigenden Bauteilstrukturen, um einen vorgegebenen Faktor kleiner als eine vorgegebene Maximalspannung ist, um das Bauteil an Schwachstellen nicht zu schädigen.

## Beschreibung

Die akustische Thermographie ist ein zerstörungsfreies Prüfverfahren zum Nachweis von Defekten in Prüfteilen unterschiedlicher Größe, Material und Bauform.

Allgemein wird das Prüfteil mit Hochleistungsultraschall (typisch > ca. 15 kHz, > ca. 100 W) in Schwingung versetzt, die an Defekten wie Rissen oder Delaminationen durch unterschiedliche Effekte in Wärme umgewandelt wird. Diese örtliche thermische Antwort wird mit Hilfe einer Wärmebildkamera aufgezeichnet und anschließend ausgewertet. Bei überhöhten Schwingungsamplituden, die bevorzugt an dünneren Bereichen des Prüfteils auftreten, kann es allerdings zu einer lokalen Schädigung kommen.

Die herkömmliche Umsetzung akustischer Thermographie geschieht mit etwa 20 kHz Festfrequenz. Dabei wird nicht das individuelle Schwingungsverhalten des einzelnen Prüfteils berücksichtigt, wodurch es einerseits zu einer verhältnismäßig schlechten Teil-zu-Teil-Reproduzierbarkeit kommt und andererseits die Wahrscheinlichkeit einer lokalen Schädigung weder vorhergesagt noch verringert werden kann. Rissbildung und Rissfortschritt treten ein, sobald die Streckgrenze des Materials örtlich überschritten wird.

Derzeit kann durch folgende Methoden versucht werden, die Zerstörungsfreiheit der beschriebenen Technik nachzuweisen:
a) Reihenmessungen an einem Prüfteil, wobei, falls das Prüfteil nach n Prüfzyklen nicht geschädigt wurde, die Gefahr, ein vergleichbares Teil in einem Zyklus zu schädigen, gering ist. Da jedoch selbst Bauteile gleichen Typs leicht unterschiedliche Schwingungsspektren aufweisen, kann es sein, dass ein Teil nicht geschädigt wird, ein anderes Teil jedoch bei gleichen Prüfbedingungen lokal beschädigt wird.
b) Laservibrometrie-Untersuchungen zur Bestimmung der Schwingung des Prüfteils. Hier können jedoch keine Aussagen über die Belastungen innerer Strukturen gemacht werden.

Aus der EP 1 582 867 A2 ist beispielsweise ein Verfahren bekannt, welches mit abstimmbaren Erregern arbeitet, mit deren Hilfe das individuelle Schwingungsverhalten jedes einzelnen Prüfteils berücksichtigt werden kann. Durch Anregung mehrerer Resonanzfrequenzen erhält man eine bessere Teil-zu-Teil-Reproduzierbarkeit bei gleichzeitig erhöhtem Wirkungsgrad, da bei resonanter Anregung weniger elektrische Leistung notwendig ist, um eine ausreichend hohe Schwingungsamplitude des Prüfteils zu erhalten. Der Nachteil einer möglichen lokalen Schädigung, beispielsweise an Orten mit geringer Materialstärke, bleibt jedoch noch erhalten.

Der Erfindung liegt die Aufgabe zugrunde, ein Verfahren zur akustischen Thermographie zu beschreiben, mit dem ein Bauteil auf Fehlstellen, insbesondere Risse oder Brüche, besser reproduzierbar geprüft werden kann und gleichzeitig keine Defektinitiierung oder -fortschreitung im Bauteil auftreten, die durch Überschreitung örtlicher Kennwerte auftreten.

Die Lösung geschieht anhand der Merkmalskombination entsprechend Anspruch 1. Vorteilhafte Ausgestaltungen sind den Unteransprüchen zu entnehmen.

Die Erfindung beruht auf der Auswahl optimaler Resonanzfrequenzen aus der Vielzahl auftretender Resonanzfrequenzen, um die lokale Nachweiswahrscheinlichkeit von Fehlstellen weiter zu erhöhen und gleichzeitig die Wahrscheinlichkeit einer Schädigung an Schwachstellen zu minimieren.

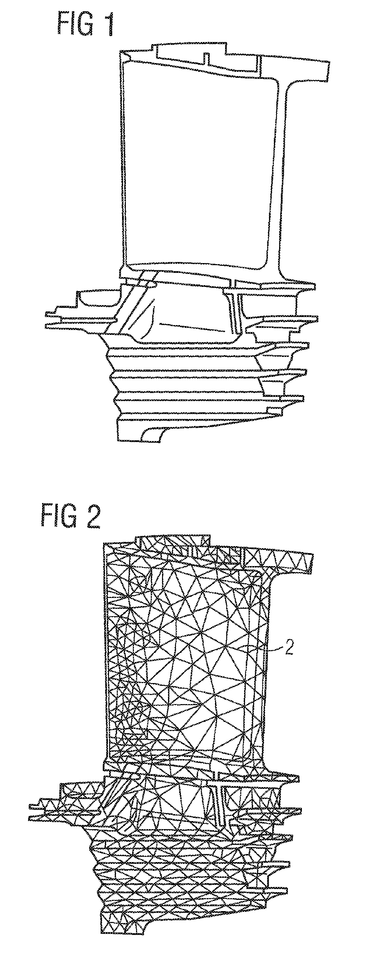

Entsprechend der Erfindung wird ein CAD-Modell des Prüfteils betrachtet und ein Finite-Elemente-Simulationsprogramm zur Berechnung von Schwingungsspektren und modalen Schwingungsformen eingesetzt. Aus den Moden können wiederum die lokalen mechanischen Spannungen berechnet werden, woraus sich Aussagen zur Zerstörungsfreiheit bezogen auf das gesamte Teil ableiten lassen (Fig. 1 bis Fig. 4).

Die Stelle der Einkopplung spielt eine wichtige Rolle, da in Abhängigkeit von dieser bestimmte Moden besser oder schlechter angeregt werden können. Natürlich kann mit dem hier beschriebenen Verfahren auch der Einkoppelort optimiert werden. Der Einkoppelort für den Ultraschallerreger wird dabei entsprechend an die Bauteilform angepasst.

Im Folgenden werden anhand schematischer Figuren Ausführungsbeispiele beschrieben. Die Figuren zeigen im Einzelnen:
- Figur 1:: zeigt ein importiertes CAD-Modell, hier eine Turbinenschaufel,
- Figur 2:: zeigt ein vernetztes Modell im Finite-Elemente-Simulationsprogramm,
- Figur 3:: zeigt eine berechnete resonante Schwingform, auch bezeichnet als Mode,
- Figur 4:: zeigt die aus Figur 3 berechneten mechanischen Spannungen im Innern des Bauteils,
- Figur 5:: zeigt eine günstige Frequenz, gleichbedeutend mit maximierter Spannung in dem Bereich(A), in dem nach Defekten gesucht werden soll und mäßiger Spannung an fragilen Versteifungen (B).
- Figur 6:: zeigt eine ungünstige Frequenz gleichbedeutend mit wenig Spannung in dem Bereich(A), in dem nach Defekten gesucht werden soll, aber überhöhter Spannung an fragilen Versteifungen (A).

Zunächst werden alle Moden/Schwingformen im interessierenden Frequenzbereich, zum Beispiel 15 bis 25 kHz, berechnet und für diese Moden werden die auftretenden mechanischen Spannungen berechnet. Diese unterliegen folgenden Randbedingungen: Zum Nachweis von Defekten sind bestimmte Mindestspannungen nötig, ab einer Grenzspannung wird das Material allerdings zerstört.

Die anzuregenden Moden werden nun nach folgendem Verfahren ausgesucht, wobei vorausgesetzt wird, dass lediglich ein ausgewählter Bereich des zu prüfenden Bauteils auf Defekte untersucht werden soll. Ist dies nicht der Fall, so entfällt a), vgl. Figuren 1 und 2:
a) Die Spannung in dem ausgewählten Bereich muss über der Mindestspannung liegen, da sonst kein sicherer Defektnachweis möglich ist,
b) Die mechanische Spannung in allen anderen Teilen des Prüfteils, also insbesondere an leicht zu schädigenden Bauteilstrukturen muss um einen vorgegebenen Faktor unter einer Grenzspannung liegen, um das Material nicht zu schädigen.

Da sich nun jedes reale Bauteil vom idealen CAD-Modell unterscheidet, müssen die so gefundenen optimalen Resonanzfrequenzen mit dem Realteil abgeglichen werden. Es wird das Schwingungsspektrum des Realteils gemessen, beispielsweise durch Sweepanregung mit dem Erreger bei geringer Leistung und Detektion mit einem Schwingungssensor, etwa einem Laservibrometer und mit dem berechneten Spektrum des Modells verglichen. Durch einen Korrellationsalgorithmus werden die beiden Spektren zur Deckung gebracht. Mit den daraus erhaltenen Korrekturfaktoren werden die vorher berechneten optimalen Frequenzen umgerechnet. Anschließend findet die eigentliche Erregung des Prüfteils bei diesen korrigierten Frequenzen statt.

Figur 1 zeigt eine Darstellung eines importierten CAD-Modells, hier eine Turbinenschaufel, die als reales Gebilde zu prüfen ist.

In Figur 2 ist eine Vernetzung (2) auf dem CAD-Modell vorhanden, welche anhand eines Finite-Elemente-Simulationsprogramms auf dem Modell aufgebracht ist.

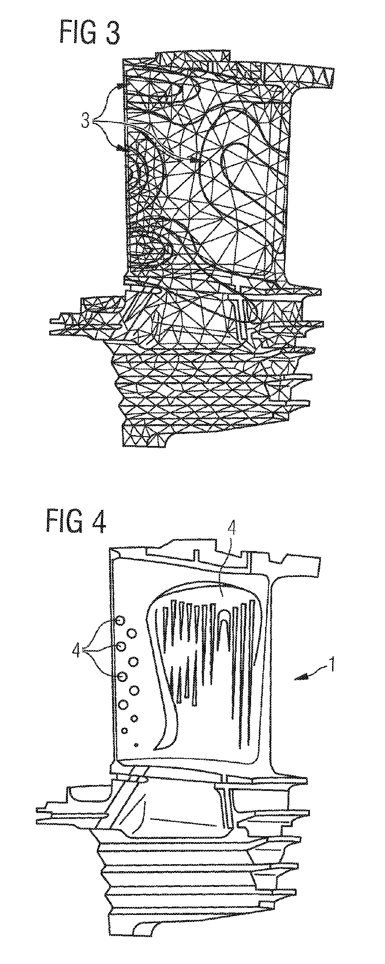

Eine der berechneten Schwingformen ist in Figur 3 dargestellt. Sie wird auch als Mode (3) bezeichnet.

Die aus den Moden ermittelten mechanischen Spannungen (4) im Innern des Bauteils zeigt Figur 4.

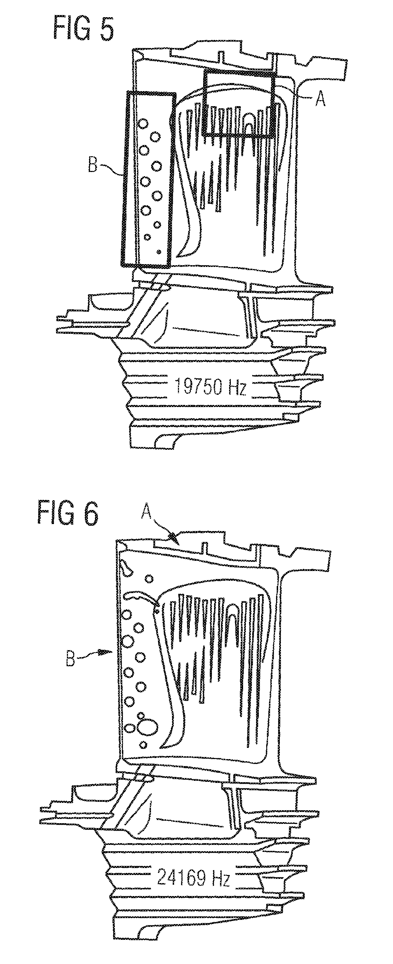

Figur 5 zeigt eine günstige Frequenz, mit einer maximierten Spannung in dem Bereich, in dem nach Defekten gesucht werden soll (A) und mäßiger Spannung an fragilen Versteifungen (B).

Figur 6 zeigt eine ungünstige Frequenz, da kaum Spannung in dem Bereich (A), in dem nach Defekten gesucht werden soll, auftritt, jedoch überhöhte Spannung an fragilen Versteifungen (B).

## Patentansprüche

1. Verfahren zur Optimierung der Spannungsverteilung an einem auf Defekte zu prüfenden Objekt (1) mittels Ultraschallanregung und Auswertung anhand resultierender oberflächlicher Temperaturverteilung, mit folgenden Schritten:
- vor einer Prüfung eines Objektes wird eine Simulation an einem CAD-Modell (Computer Aided Design) des Objekts unter Prüfbedingungen vorgenommen,
- es werden Schwingungsspektren und modale Schwingungsformen (3) berechnet,
- aus den Schwingungsmoden (3) werden jeweils lokale mechanische Spannungen (4) ermittelt, wobei
- für die reale Prüfung anzuregende Moden derart aus der Gesamtheit der auftretenden Moden ausgewählt werden, dass
- die mechanische Spannung (4) in einem ausgewählten Bereich (A) über einer vorgegebenen Mindestspannung liegt, um einen sicheren Defektnachweis zu ermöglichen,
- die mechanische Spannung (4) in allen anderen Bereichen (B) des Prüfteils (1), insbesondere an leicht zu schädigenden Bauteilstrukturen, um einen vorgegebenen Faktor kleiner als eine vorgegebene Maximalspannung ist, um das Bauteil an Schwachstellen nicht zu schädigen.

2. Verfahren nach Anspruch 1, worin zur Berechnung von Schwingungsspektren und modalen Schwingungsformen eine Finite-Elemente-Simulationsmethode eingesetzt wird.

3. Verfahren nach Anspruch 1 oder 2, worin zuerst alle Moden im Frequenzbereich zwischen etwa 15 und 25 kHz berechnet werden und für diese Moden die auftretenden mechanischen Spannungen berechnet werden.

4. Verfahren nach einem der vorhergehenden Ansprüche, worin ausgewählte optimale Resonanzfrequenzen mit dem Realbauteil abgeglichen werden, indem das Schwingungsspektrum des Realbauteils gemessen wird und mit dem berechneten Spektrum des Modells verglichen wird.

5. Verfahren nach Anspruch 4, worin durch eine Anregung mit dem Ultraschallerreger bei geringer Leistung durch Detektion mit einem Schwingungssensor, beispielsweise Laservibrometer, das Schwingungsspektrum des Realbauteils gemessen wird.

6. Verfahren nach Anspruch 4 oder 5, worin mittels eines Korrellationsalgorithmus die beiden Spektren zur Deckung gebracht werden.

7. Verfahren nach einem der vorhergehenden Ansprüche, worin der Einkoppelort für den Ultraschallerreger auf die Bauteilform angepasst wird.
